# EUROPEAN PATENT APPLICATION

(11) **EP 1 762 678 A1**
(43) Date of publication of application: **14.03.2007**
(21) Application number: 06732140.6
(22) Date of filing: 20.04.2006
(51) Int. Cl.: E05B 49/00, B60R 25/00

(54) **AUTOMOBILE**

(30) Priority: 22.04.2005 JP 2005124641
(71) Applicant: MATSUSHITA ELECTRIC INDUSTRIAL CO., LTD., Osaka 571-8501 (JP)
(72) Inventor: INOUE, Makoto Matsushita Electric Industrial, Chuo-ku, Osaka - shi Osaka 540-6319 (JP)
(74) Representative: Pautex Schneider, Nicole Véronique
(86) International application number: PCT/JP2006/008282
(87) International publication number: WO 2006/115159

(57) **Abstract**

The motorcar contains metallic door (6) for opening and closing an entry space to the inside of the car body; door handle (9) by which the door is opened and closed; a door-lock system for locking/unlocking door (6); radio-wave-permeable lid (11) that covers an opening formed so as to correspond to the position of door handle (9); antenna (12) disposed on lid (11) inside the door; a controller that is connected to antenna (12) and controls the locking and unlocking operations of the door-lock system; and a portable key for establishing radio communications with antenna (12).

## Description

### TECHNICAL FIELD

The present invention relates to a motorcar in which the opening and closing operations of doors are controlled by radio waves sent from a portable key that the user carries.

### BACKGROUND ART

Conventionally, such a motorcar contains a car body, a metallic door for opening and closing an entry space to the car body, a door handle by which the door is opened and closed, a door-lock system for locking/unlocking the door, and antennas disposed inside and outside the door.

According to the conventional car structured above, in the door-opening operation from outside the car, the user operates the portable key, approaching the car. In response to the switch operation, the portable key sends radio waves to the outside antenna disposed outside the door to open the door, so that the door is unlocked and the user can get into the car.

When the user enters the car, the entry of the user is now detected by radio wave communications between the portable key and the inside antenna disposed inside the car. In this way, the user can start the engine.

On the other hand, when the user opens the door and gets out of the car, the door-lock system recognizes that the user is out by the radio wave communications between the portable key and the outside antenna. After that, when the user steps away with a distance where the portable key no longer communicates with the outside antenna, the door is locked.

The conventional structure above is disclosed in, for example, Japanese Patent Unexamined Publication No. 2003-221954.

In a car equipped with the conventional door-lock system, however, the antenna needs to be disposed both sides (i.e., outside and inside the car) for radio communications with the portable key, thereby increasing the installation space. In recent years, to enhance energy efficiency, demand for a lightweight car has been increasing. To cater to the trend, each component of a car should be made as compact as possible. In terms of space-saving installation, the conventional structure having two or more antennas disposed inside and outside a car has been an obstacle to manufacture of a compact car.

### SUMMARY OF THE INVENTION

The car of the present invention contains a car body, a metallic door for opening and closing an entry space to the interior of the car body, a door handle by which the door is opened and closed, a door-lock system for locking/unlocking the door, a radio-wave-permeable lid for covering an opening disposed at a position corresponding to the position of the door handle, an antenna disposed on the lid inside the door, a controller that is connected to the antenna and controls the locking and unlocking operations of the door-lock system, and a portable key for establishing radio communications with the antenna.

According to the structure above, the opening is disposed at the position of the door handle, and the opening is covered with the radio-wave-permeable lid. Attaching the antenna to the radio-wave-permeable lid inside the door allows a user, regardless of whether the user is inside or outside the car, to operate the portable key to have radio communications with the antenna. The structure above can reduce the antennas to one in number, providing a space-saving design.

### BRIEF DESCRIPTION OF THE DRAWINGS

Fig. 1 is a plan view of a motorcar in accordance with an exemplary embodiment of the present invention.
Fig. 2 is a front view of a door of the motorcar shown in Fig. 1.
Fig. 3 is a section view of the door of the motorcar shown in Fig. 1.
Fig. 4 is a front view of an opening formed at a position so as to correspond to the position of a door handle of the motorcar shown in Fig. 1.
Fig. 5 is a section view of the opening and the periphery in Fig. 4.
Fig. 6 is a control block diagram illustrating the structure in accordance with the exemplary embodiment of the present invention.
Fig. 7 shows communications range of the motorcar in accordance with the exemplary embodiment of the present invention.

### REFERENCE MARKS IN THE DRAWINGS

- 1: car body
- 6: door
- 9: door handle
- 10: opening
- 11: lid
- 12: antenna
- 13: door-lock system
- 14: controller
- 20: door-request switch
- 21: portable key

### DETAILED DESCRIPTION OF THE PREFERRED EMBODIMENTS

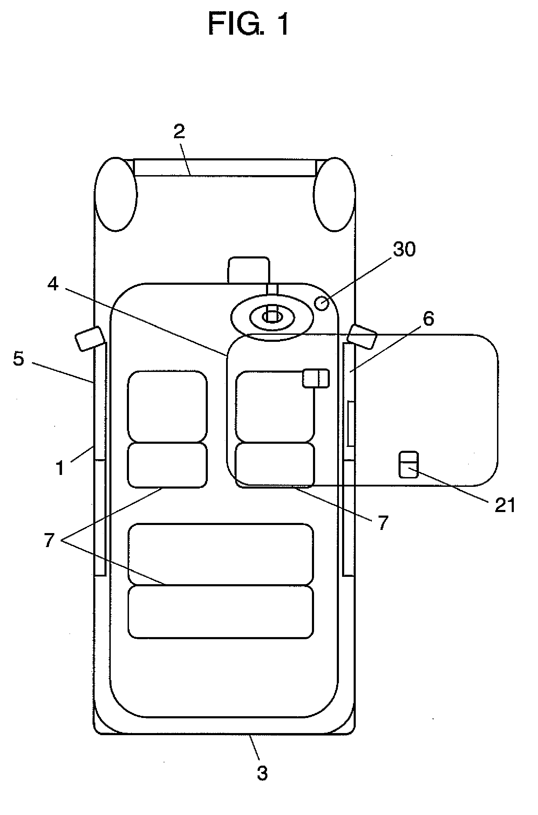

An exemplary embodiment of the present invention will be described hereinafter with reference to accompanying drawings. Fig. 1 is a plan view of a motorcar in accordance with the exemplary embodiment of the present invention. In Fig. 1, car body 1 of the motorcar is formed of engine room 2 situated at the front, trunk room 3 situated at the rear, and seat section 4 formed between engine room 2 and trunk room 3. Seat section 4 has at least two doors 5 and 6. Seat section 4 contains seats 7.

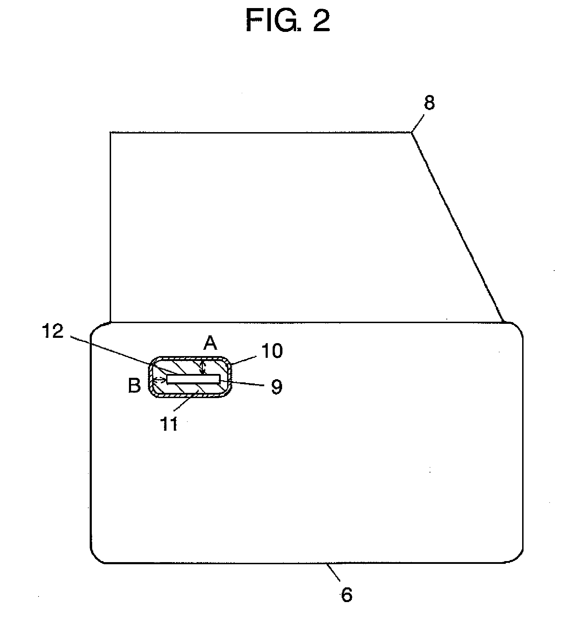

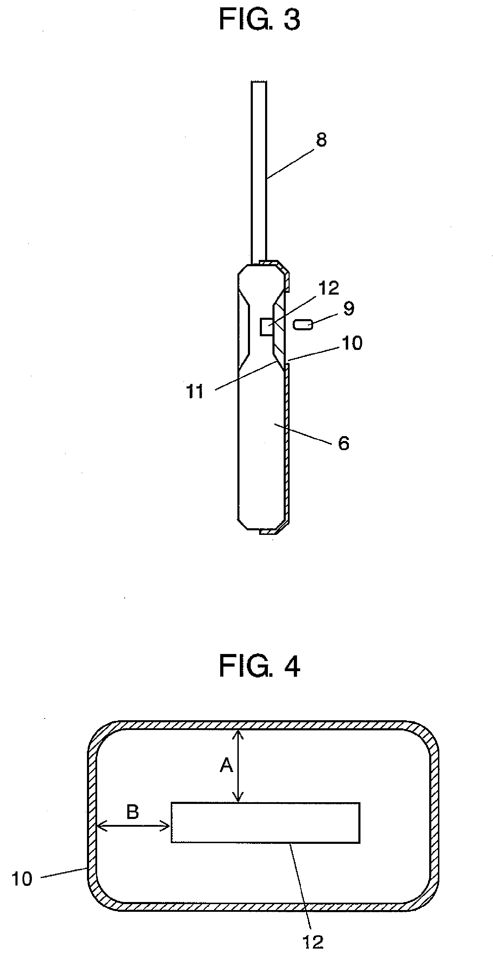

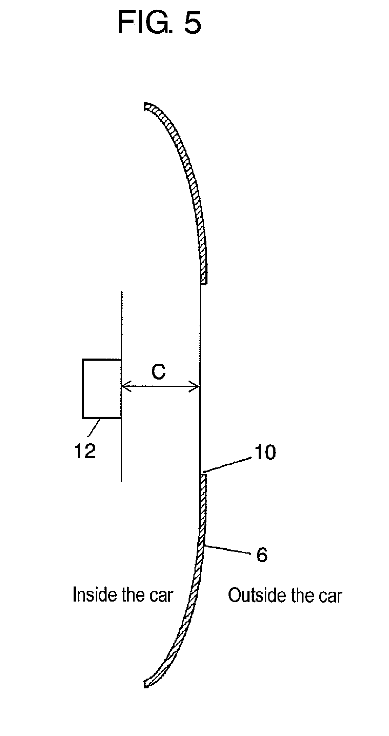

Here will be described door 6 shown in Fig. 1. Fig. 2 and Fig. 3 are a front view and a section view of door 6, respectively, of the motorcar shown in Fig. 1. Fig. 4 is a front view of an opening formed so as to correspond to the position of the door handle. Fig. 5 is a section view of the opening shown in Fig. 4.

As shown in Fig.2 and Fig. 3, window 8 is disposed on metallic door 6. Door handle 9 is fixed to door 6; to be more specific, opening 10 is formed so as to fit with the position at which the door handle is to be fixed. Opening 10 is covered with lid 11 made of a radio wave-permeable material, for example, synthetic resin. Antenna 12 is disposed on lid 11 inside the car.

In the embodiment, as shown in Fig. 4 and Fig. 5, rodlike antenna 12 is disposed on lid 11 in a lengthwise arrangement. Opening 10 has a substantially rectangular shape and is disposed in a lengthwise arrangement. As shown in Fig. 4, the length of a longer side of antenna 12 is less than that of a longer side of opening 10; similarly, the length of a shorter side of antenna 12 is less than that of a shorter side of opening 10. That is, antenna 12 is longitudinally and laterally smaller than opening 10. To be more specific, as shown in Fig. 4, antenna 12 is disposed in opening 10, keeping distance "A" away from the longer side and distance "B" away from the shorter side of opening 10. In other words, antenna 12 is disposed in opening 10 so that each end of antenna 12 does not make a contact with each end of opening 10.

Besides, as shown in Fig. 5, antenna 12 is located so as to have distance "C" (approx. several millimeters to several centimeters) away from opening 10. Keeping a distance from opening 10 avoids inconveniencies, such as frequency drift, which can occur when antenna 12 is disposed too close to metallic door 6.

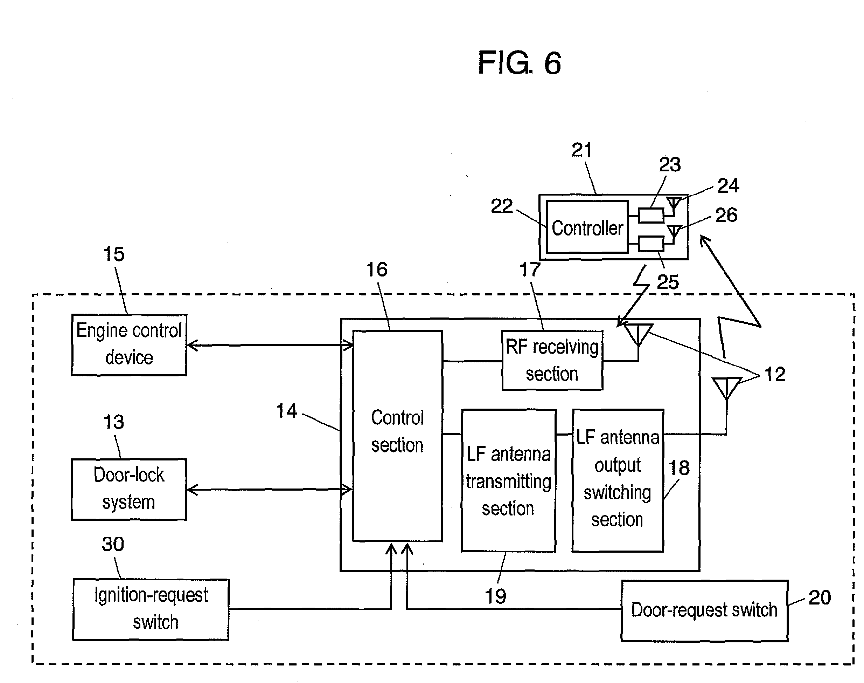

Next will be described the control block diagram shown in Fig. 6 illustrating the structure of the embodiment of the present invention. Door-lock system 13 of Fig. 6 is responsible for locking and unlocking door 6 of Fig. 1. Door-lock system 13 is connected to control section 16 of controller 14. Engine control device 15, which is accommodated in engine room 2 shown in Fig.1, is also connected to control section 16 of controller 14. In addition, RF receiving section 17, door-request switch 20 that is actuated when the user's hand touches door handle 9 (Fig. 2), and ignition-request switch 30 (Fig. 1) are connected to control section 16. Antenna 12 is connected to LF antenna transmitting section 19 via LF antenna output switching section 18.

On the other hand, in portable key 21 that the user carries, controller 22 is disposed. LF antenna 24 is connected to controller 22 via LF receiving section 23, and similarly, RF antenna 26 is connected to controller 22 via RF transmitting section 25. Radio-wave communications between portable key 21 and controller 14 connected to antenna12 allow door-lock system 13 to control for locking and unlocking operations.

A distinctive feature of the structure of the embodiment is that a single antenna 12 fixed to the car body is all that is needed to have communications with portable key 21.

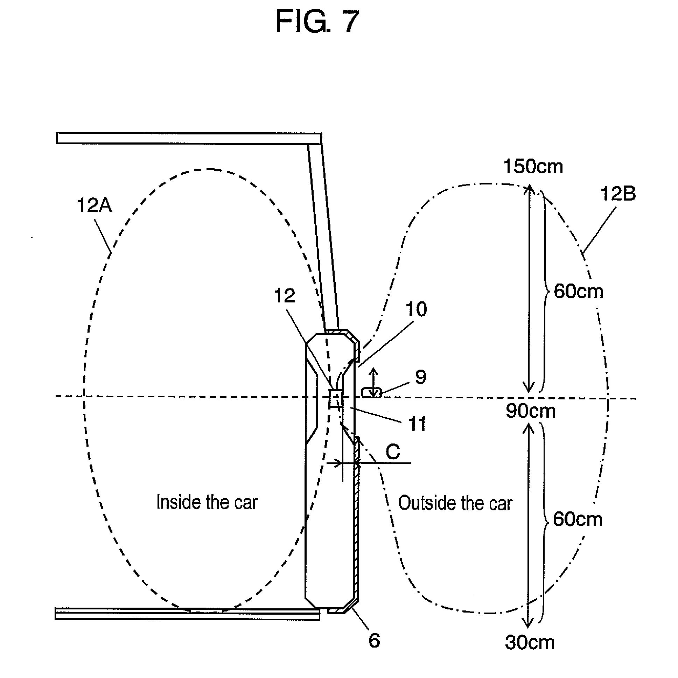

Fig. 7 shows communications range of the motorcar of the embodiment, specifically, shows the area within the reach of radio waves sent from antenna 12. In Fig. 7, communications area 12A shown in broken lines represents the reachable area inside the car, whereas communications area 12B shown in dash-single-dot lines represents the reachable area outside the car.

Fig. 7 shows that antenna 12 is disposed at a height of approx. 90 cm above the ground. Communications area 12B outside the car has a reachable range of 90 cm ± 60 cm, that is, the upper limit is 150 cm above the ground. The upper limit is determined on consideration that the radio communications can be established with portable key 21 carried in the user's chest pocket. The lower limit of communications area 12B is 30 cm above the ground. This is determined on consideration that the radio communications can be established with portable key 21 carried in the user's bag.

The antenna installation, in which antenna 12 is located in the middle of opening 10 as shown in Fig. 4 and Fig. 7, is important for providing communications area 12B described above.

In spite of being situated inside door 6, antenna 12 operates in communications area 12B ranging from 30 cm to 150 cm above the ground. At the same time, antenna 12 operates in communications area 12A inside the car. The communications range of communications area 12A in the vertical direction is practically restricted by the top plate (roof) and the floor plate of a car.

Now will be described the case where a user carrying portable key 21 gets in the car. First, the user approaches communications area 12B outside door 6 (Fig. 7) and touches door-request switch 20 disposed on door handle 9 (Fig. 6). In response to the action, control section 16 sends a starting signal to antenna 12 (Fig. 6) via LF antenna transmitting section 19 and LF antenna output switching section 18. The starting signal is further sent to LF antenna 24 of portable key 21. Receiving the signal, controller 22 of portable key 21 sends an identification signal, which is specific to each of portable key 21, via RF antenna 26. Antenna 12 sends the identification signal to control section 16 via RF receiving section 17. Receiving the signal from antenna 12, controller 14 requests door-lock system 13 to unlock the door. Through the process, the user opens door 6 to enter the car and seats himself/herself on seat 7. The structure of the embodiment, as described above, has an external recognition-starting switch that functions when the user with portable key 21 unlocks the door and gets in the car.

Once the user settles himself/herself on seat 7, ignition-request switch 30 sends a starting signal to portable key 21 via antenna 12. Like in the radio wave communications outside the car (in communications area 12B), the identification signal of portable key 21 is transmitted to control section 16 in communications between antenna 12 and portable key 21. Receiving the identification signal, control section 16 detects that the user stays inside the car, allowing the user to start engine via engine control device 15. The structure of the embodiment, as described above, has an internal recognition-starting switch that functions when the user has entered into the car. A seat weighted sensor, which detects a weighted value on the seat when the user sits down, may be used for detecting the user on seat 7.

Next will be described the case where the user stops the engine and leaves the car. When the user opens door 6 and gets out of the car, portable key 21 has radio communications with antenna 12 in communication area 12B. After the user steps into the outside of communications area 12B, the door is locked.

According to the structure of the embodiment, as described above, antenna 12, which serves as both the inside antenna and the outside antenna, transmits the starting signal to portable key 21. Compared to a conventional structure having antennas separately disposed inside and outside, the structure of the embodiment contributes to space-saved installation.

According to the system of the present invention, by transmitting RF signals used for remote one-way data transmission from portable key 21, the door can be locked/unlocked without inserting a mechanical key into a keyhole, that is, the system provides keyless entry operation.

Furthermore, as a feature of the system, in a case where portable key 21, if it has sufficient battery life, is used for smart start operation for recognition by means of remote two-way communication, and portable key 21, if it has a flat battery, works as a immobilizer for recognition by means of proximity two-way communication, all the recognition functions of portable key 21 can be done by antenna 12 and controller 14. Antenna 12 copes with proximity two way communication, thereby eliminating a conventionally required emergency mechanical key. Bringing portable key 21 close to opening 10 of door 6 allows the system to complete recognition and unlocking operations in emergency.

That is, portable key 21 does not need battery power when it works for proximity two-way communication, whereas it needs battery power when it works for remote two-way communication or remote one-way transmission. Besides, antenna 12, as proximity two-way communication, can be used as a part of a device for carrying out recognition of portable key 21 that operates without battery power.

As for the door-lock operation, the system of the embodiment is basically controlled as follows: when recognition by door-request switch 20 is successfully completed, that is, when a recognition match is obtained by the external recognition-starting switch, controller 14 unlocks the doors if the doors have been locked at the point in time of recognition, or locks the doors if the doors have been unlocked. However, in a case where the door-lock system provides a plurality of portable keys assigned to two or more users and the keys successfully complete recognition by the external recognition-starting switch, controller 14 may be controlled so as not to lock the doors, even if the doors have been unlocked, for the rest of the users.

Controller 14 also prohibits door-unlocking operation, in order to prevent unauthorized entries by a stranger, when the system recognizes that the user is in the car, for example, when the engine starts or a detecting device detects the user. In other words, controller 14 can be controlled so as not to unlock the door even if recognition by the external recognition-starting switch successfully completes, when predetermined switch operations performed after the user got into the car and closed the door allow the system to detect user's entry.

Controller 14 of the structure of the embodiment may be controlled as follows: as for the door in door-unlocked condition, the communications range used for antenna 12 and portable key 21 is determined to be narrow; on the other hand, as for the door in door-locked condition, the communications range is determined to be wide. To avoid a locked-in problem in which portable key 21 is left inside the locked doors, LF antenna output switching section 18 changes the communications range, providing a narrower range for the door-unlocked condition and providing a broader range for the door-locked condition. By virtue of the broader communication range for the door-locked condition, the locked-in problem can be avoided, if the doors are inadvertently locked.

Besides, controller 14 indicates battery condition of portable key 21. That is, when portable key 21 shows battery voltage lower than a predetermined value, controller 14 issues warning for a predetermined number of time and stops communications between portable key 21 and antenna 12, that is, switches the system to keyless one-way communication control, such as proximity recognition and keyless operation. The user thus knows that the battery need replacing before it is completely dead. The switching operation above is also possible on the side of portable key 21. When battery voltage is lower than a predetermined value, portable key 21 switches its operation to the door-lock control where keyless one-way communication is only available.

As described earlier, controller 14 changes the communications range according to door condition: a broader range for the door-unlocked condition, and a narrower range for the door-locked condition. As another possible control, the communications range can be controlled according to communication speed for recognition.

In a door-lock system with no function of preventing the portable key from being locked-in, the following can occur. For example, after getting out of the car, the user noticed that portable key 21 was left inside the closed door. At this time, suppose that the battery of portable key 21 unfortunately almost runs down. Outside the car, the user tries recognition by door-request switch 20. In the meanwhile, the battery of portable key 21 is completely dead, so that the door unlocking operation fails. According to the system of the embodiment, however, such a problem can be prevented.

### INDUSTRIAL APPLICABILITY

According to the motorcar of the present invention, a single antenna is all that is needed to transmit signals to a portable key. This contributes to space-saved design, and accordingly, providing a compact, lightweight motorcar.

## Claims

1. A motorcar comprising:
a car body;
a metallic door for opening and closing an entry space to an inside of the car body;
a door handle by which the door is opened and closed;
a door-lock system for locking/unlocking the door;
a radio-wave-permeable lid for covering an opening that is formed so as to correspond to a position to which the door handle is fixed;
an antenna disposed on the lid inside the door;
a controller that is connected to the antenna and controls locking and unlocking operations of the door-lock system; and
a portable key for establishing radio communications with the antenna.

2. The motorcar of claim 1, wherein the antenna is contained in the opening.

3. The motorcar of claim 2, wherein the antenna is contained in the opening in a way that ends of the antenna make no contact with perimeter of the opening.

4. The motorcar of claim 1 further includes an external recognition-starting switch for operating recognition of the portable key when a user carrying the portable key opens the door from an outside and gets in the inside of the car body, and an internal recognition-starting switch for operating recognition of the portable key after entry of the user.

5. The motorcar of claim 1, wherein the antenna, as proximity two-way communication, can be used as a part of a device for carrying out recognition of the portable key that operates without battery power.

6. The motorcar of claim 1, wherein the portable key has no need of battery power when it operates for proximity two-way communication, while the portable key needs battery power when it operates for remote two-way communication or remote one-way transmission.

7. The motorcar of claim 4, wherein the controller unlocks the door in door-locked condition, or locks the door in door-unlocked condition when detecting a match in the recognition by the external recognition-starting switch.

8. The motorcar of claim 4, wherein the controller prohibits door-unlocking operation on the door in the door-locked condition when detecting that the user is in the car body after the door is closed and a match is obtained in the recognition by the external recognition-starting switch.

9. The motorcar of claim 8, wherein a seat weighted sensor is employed for detecting the user.

10. The motorcar of claim 4, wherein the controller prohibits door-locking operation on the door in the door-unlocked condition when the motorcar contains a plurality of portable keys and they have a match in the recognition by the external recognition-starting switch.

11. The motorcar of claim 4, wherein the controller changes a communication range of the radio communications so as to provide a narrower range for door-unlocked condition, and provide a broader range for door-locked condition.

12. The motorcar of claim 11, wherein the communication range is controlled according to communication speed for the recognition.

13. The motorcar of claim 4, wherein the controller issues warning for a predetermined number of time and switches communication control to proximity recognition or keyless operation when the portable key shows low battery power.

## Amended claims

### Amended claims under Art. 19.1 PCT

1. (Amended) A motorcar comprising:
a car body;
a metallic door for opening and closing an entry space to an inside of the car body;
a door handle by which the door is opened and closed;
a door-lock system for locking/unlocking the door;
a radio-wave-permeable lid for covering an opening that is formed so as to correspond to a position to which the door handle is fixed;
an antenna disposed on the lid inside the door;
a controller that is connected to the antenna and controls locking and unlocking operations of the door-lock system;
a portable key for establishing radio communications with the antenna;
an external recognition-starting switch for operating recognition of the portable key when a user carrying the portable key opens the door from an outside and gets in the inside of the car body; and
an internal recognition-starting switch for operating recognition of the portable key after entry of the user,
wherein, the controller changes a communication range of the radio communications so as to provide a narrower range for door-unlocked condition, and provide a broader range for door-locked condition.

2. The motorcar of claim 1, wherein the antenna is contained in the opening.

3. The motorcar of claim 2, wherein the antenna is contained in the opening in a way that ends of the antenna make no contact with perimeter of the opening.

4. (Deleted)

5. The motorcar of claim 1, wherein the antenna, as proximity two-way communication, can be used as a part of a device for carrying out recognition of the portable key that operates without battery power.

6. The motorcar of claim 1, wherein the portable key has no need of battery power when it operates for proximity two-way communication, while the portable key needs battery power when it operates for remote two-way communication or remote one-way transmission.

7. (Amended) The motorcar of claim 1, wherein the controller unlocks the door in the door-locked condition, or locks the door in the door-unlocked condition when detecting a match in the recognition by the external recognition-starting switch.

8. (Amended) The motorcar of claim 1, wherein the controller prohibits door-unlocking operation on the door in the door-locked condition when detecting that the user is in the car body after the door is closed and a match is obtained in the recognition by the external recognition-starting switch.

9. The motorcar of claim 8, wherein a seat weighted sensor is employed for detecting the user.

10. (Amended) The motorcar of claim 1, wherein the controller prohibits door-locking operation on the door in the door-unlocked condition when the motorcar contains a plurality of portable keys and they have a match in the recognition by the external recognition-starting switch.

11. (Deleted)

12. (Amended) The motorcar of claim 1, wherein the communication range is controlled according to communication speed for the recognition.

13. (Amended) The motorcar of claim 1, wherein the controller issues warning for a predetermined number of time and switches communication control to proximity recognition or keyless operation when the portable key shows low battery power.
